# EUROPEAN PATENT SPECIFICATION

(11) **EP 1 756 632 B1**
(45) Date of publication and mention of the grant of the patent: **01.07.2015**
(21) Application number: 05749765.3
(22) Date of filing: 12.05.2005
(51) Int. Cl.: G02B 5/124

(54) **RETROREFLECTIVE STRUCTURES**
RETROREFLEKTIVE STRUKTUREN
STRUCTURES RETROREFLECHISSANTES

(30) Priority: 12.05.2004 US 570411 P; 07.10.2004 US 616819 P
(43) Date of publication of application: 28.02.2007
(73) Proprietor: ORAFOL Americas Inc., Avon, CT 06001-4217 (US)
(72) Inventor: NILSEN, Robert, B., Mystic, CT 06355 (US); MULLEN, Patrick, W., Barkhamsted, CT 06063 (US)
(74) Representative: Pfenning, Meinig & Partner GbR
(86) International application number: PCT/US2005/016692
(87) International publication number: WO 2005/114268

(56) References cited:
- WO-A1-00/43813
- US-A- 3 684 348
- US-A- 3 689 346
- US-A- 6 024 455
- US-B1- 6 247 818

## Description

### BACKGROUND OF THE INVENTION

Retroreflective materials are employed for various safety and decorative purposes. Particularly, these materials are useful at nighttime when visibility is important under low light conditions. With perfect retroreflective materials, light rays are reflected essentially towards the originating light source in a substantially parallel path along an axis of retroreflectivity.

Many types of retroreflective material exist for various purposes. These retroreflective materials can be used as reflective tapes and patches for clothing, such as vests and belts. Also, retroreflective materials can be used on posts, barrels, traffic cone collars, highway signs, warning reflectors, etc. Retroreflective material can be comprised of arrays of randomly oriented micron diameter spheres or close packed cube-corner (prismatic) arrays. Examples of retroreflective materials can be found e.g. in WO 00/43813 A1, US 6,247,818 B1, and US 6,024,455.

### SUMMARY OF THE INVENTION

A retroreflective structure or chip is provided according to claim 1 that includes a plurality of cube-corner prisms with substantially all of the prisms including a window side and a facet side. The structure can further include a reflective coating on the facet side and a coating on the window side that absorbs visible light while allowing light having a predetermined wavelength to pass therethrough to be retroreflected by the cube-corner prisms. In one example, the predetermined wavelength includes long wavelength light. In a particular example, the structure has a length less than about 6.35 mm.

Retroreflective structures, which can include chips, flakes, threads, fibers, sheeting, polyhedron retroreflectors, etc., are provided in accordance with examples. The corner-cube structures can utilize full square-sided or triangular-sided surfaces and/or open faced or solid cube-corner prisms.

The retroreflective structure can further include a matte coating on the reflective coating. In other examples, the structure can include a substrate disposed between the cube-corner prisms and the coating on the window side. Moth-eye structures can be provided on the coating for improving light transmission through the retroreflective structure.

In further examples, the retroreflective structure is a first retroreflective structure. A second retroreflective structure can be attached to the first retroreflective structure to form a two-sided structure in which light having the predetermined wavelength is retroreflected in at least two, for example, opposite directions. Substrates can be disposed between the cube-corner prisms and the coatings on the window sides of the first and second retroreflective structures.

A method of identifying an object is also provided, which includes attaching retroreflective structures to a surface of the object. The retroreflective structures can be configured to retroreflect light having a predetermined wavelength. The method can include directing light having the predetermined wavelength at the retroreflective structures and detecting the retroreflected light.

The retroreflective structures can be further configured to absorb visible light. In further embodiments, the retroflective structures can be configured to retroreflect light having the predetermined wavelength in at least two directions.

In another example, a retroreflective structure is provided that includes a first plurality of retroreflectors with open-faced surfaces configured to retroreflect light. A coating can be provided on the surfaces that is configured to reflect a predetermined wavelength or range of wavelengths of light while allowing a predetermined wavelength or range of wavelengths to pass therethrough. In other examples, the structure can include a second plurality of retroreflectors with open-faced surfaces configured to retroreflect light and a coating on the surfaces of the second plurality of open-faced surfaces configured to reflect a first predetermined wavelength or range of wavelengths of light while allowing a second predetermined wavelength or range of wavelengths to pass therethrough.

The first and second plurality of retroreflector with open-faced corner cubes can be configured to retroreflect light in at least two directions. The first and second plurality of open-faced, corner cubes can be arranged in a back-to-back relationship so as to retroreflect light in opposite directions. The coating can be configured to reflect short or long wavelengths of light while reflecting midrange wavelengths.

In other embodiments, a retroreflective structure is provided that includes a first plurality of cube-corner prisms, wherein substantially all of the prisms each include a window side and a facet side. A coating can be provided on the facet side that is configured to reflect a first predetermined wavelength or range of wavelengths of light while allowing a second predetermined wavelength or range of wavelengths to pass therethrough. The structure can further include a second plurality of cube-corner prisms, wherein substantially all of the prisms each include a window side and a facet side. A coating can be provided on the facet side that is configured to reflect a first predetermined wavelength or range of wavelengths of light while allowing a second predetermined wavelength or range of wavelengths to pass therethrough. In one embodiment, the coating is configured to reflect short and long wavelengths while allowing midrange wavelengths to pass therethrough.

In a particular embodiment, the first and second plurality of cube-corner prisms are configured to retroreflect light in at least two directions and can be arranged-in-a back-to-back relationship so as to retroflect light in opposite directions.

In further embodiments, a retroreflective structure is provided that includes a plurality of cube-corner prisms, wherein substantially all of the prisms each include a window side and a facet side. The prisms can be formed from a material that is substantially transparent to specific narrow or broadband wavelengths and an optical coating can be provided on the facet side that is configured to reflect a predetermined wavelength or range of wavelengths of light. A coating can be provided on the window side that absorbs a predetermined wavelength range while allowing a second predetermined wavelength range to pass therethrough.

In accordance with other examples, an open-faced, two- sided retroreflective structure is provided that is configured to retroreflect light in opposite directions. The structure can be formed from a sheet of material or can be formed by injection molding, compression molding, micro-casting, injection micro- molding, and/or thermoforming processes. In a particular example, the sheet of material includes metal and/or polymer. In other examples, the sheet of material is formed into the open-faced retroreflective structure by progressive die processes.

In particular examples, the corner-cube structure can include five, seven, or thirteen faces. The corner-cube structure can be formed from a material that is substantially transparent to visible light and can include a coating on at least one side that is configured to reflect a first predetermined wavelength or range of wavelengths of light while allowing a second predetermined wavelength or range of wavelengths to pass therethrough. In further examples, the structure is breakable into sections. An Aztec security structure can be provided on one or more surfaces of the structure. The structure can be formed into the shape of a flake or thread.

In yet other examples, a retroreflective structure is provided that includes a plurality of open-faced surfaces on a first side of the structure. A second side of the structure can be substantially planar and the structure can be formed from a material that is substantially clear or able to transmit a predetermined wavelength or range of wavelengths of light. A first coating can be provided on the open-faced surfaces that is configured to reflect a predetermined wavelength or range of wavelengths of light while allowing a second predetermined wavelength or range of wavelength light to pass therethrough. A second coating can be provided on the first coating that is configured to reflect a first predetermined wavelength or range of wavelengths of light while allowing a second predetermined wavelength or range of wavelengths of light to pass therethrough. In particular examples, the first coating is configured to reflect short or long wavelengths and the second coating is configured to reflect long or short wavelengths while allowing midrange wavelengths light to pass therethrough.

In other examples, a retroreflective thread is provided that includes a plurality of open-faced, square-sided cube-corner prisms that are configured to retroreflect light in at least two directions. In one example, the prisms have a specular or reflective coating thereon. The prisms can have coating thereon configured to reflect a predetermined wavelength or range of wavelengths of light, such as short or long wavelength light or both. The thread can be enclosed in a substantially hollow tube or cladding. In other examples, the thread includes flex or break points.

In further examples, a one-sided full square open-faced, cube-corner prism thread is provided. In one example, two open-faced surfaces are formed therein by a mold. The thread can be enclosed in a substantially hollow or solid tube or cladding. The thread can be twisted within the tube or cladding to achieve retroreflection from various angles. The tube or cladding can be filled with a liquid crystal material and an inside surface of the tube or cladding can include an indium tin oxide-transparent coating. In one example, the thread can be formed from a wire. A specular or reflective coating can be provided on the cube-corner prism surfaces.

In further examples, an octahedron retroreflector is provided that includes eight truncated solid cube-corner prisms. The prisms can be formed and then folded into the octahedron retroreflector. A specular or reflective coating can be provided on facets of the prisms. In specific examples, the retroreflector includes metal or polymer and is formed by progressive die processes, thermoforming processes, stepped-casting processes, compression, compression injection, and /or injection micro-molding processes. A coating can be disposed on facets of the prisms that is configured to reflect a first predetermined wavelength or range of wavelengths of light while allowing a second predetermined wavelength or range of wavelengths to pass therethrough. Differential height locators can be provided on facets of the prisms to provide an air-backed octahedron retroreflector when formed. The retroreflector can be enclosed within a hollow or solid structure.

In other examples, an octahedron retroreflector is provided that includes full open-faced prism surfaces. A specular or reflective coating can be provided on the surfaces. The retroreflector can be enclosed within a hollow or solid structure.

### BRIEF DESCRIPTION OF THE DRAWINGS

The foregoing and other objects, features and advantages of the invention defined by claim 1 will be apparent from the following more particular description of various embodiments of the invention, as illustrated in the accompanying drawings 1 and 10 in which like reference characters refer to the same parts throughout the different views. The drawings are not necessarily to scale, emphasis instead being placed upon illustrating the principles of the invention.
FIG. 1 is a cross-sectional view of a retroreflective structure provided in accordance with the present invention.
FIG. 2 is a graph representing light transmission through the coating on the window side of the prisms of FIG. 1.
FIG. 3 is a cross-sectional view of a retroreflective structure provided in accordance with another example.
FIG. 4 is a cross-sectional view of a retroreflective structure provided in accordance with a further example.
FIG. 5 is a cross-sectional view of a retroreflective structure provided in accordance with yet another example.
FIG. 6 is a cross-sectional view of a two-sided retroreflective structure provided in accordance with an example.
FIG. 7 is a cross-sectional view of a two-sided retroreflective structure provided in accordance with another example.
FIG. 8 is a cross-sectional view of a retroreflective structure provided in accordance with an example.
FIG. 9 is a cross-sectional view of a retroreflective structure provided in accordance with another example.
FIG. 10 is a cross-sectional view of a retroreflective structure provided in accordance with another example.
FIG. 11 is a cross-sectional view of a two-sided retroreflective structure provided in accordance with a further example.
FIG. 12 is a cross-sectional view of a two-sided retroreflective structure provided in accordance with yet another example.
FIG. 13 is a cross-sectional view of a retroreflective structure provided in accordance with an example.
FIG. 14 is a cross-sectional view of a two-sided retroreflective structure provided in accordance with another example.
FIG. 15 is a cross-sectional view of a two-sided retroreflective structure provided in accordance with yet another example.
FIG. 16 is a top view of a prior art full or square-sided cube-corner prism.
FIG. 17 is a graph representing an increase in effective aperture of a square-sided cube-corner prism over a triangular-sided cube-corner prism and a conical cube-corner prism.
FIG. 18 is a plan view of a sheet that can be folded into a retroreflective flake.
FIG. 19 is a top view of a retroreflective flake provided in accordance with an example.
FIG. 20 is a plan view of a sheet that can be folded into a retroreflective flake.
FIG. 21 is a top view of a retroreflective flake provided in accordance with another example.
FIG. 22 is a plan view of a sheet that can be folded into a retroreflective flake.
FIG. 23 is a top view of a retroreflective flake provided in accordance with yet another example.
FIG. 24 is a cross-sectional view of a retroreflective flake having two reflective coatings provided in accordance with an example.
FIG. 25 is a plan view of retroreflective flakes that have been molded or cast into breakable sections.
FIG. 26 is a plan view of a flake that includes Aztec security structures on particular facets thereof.
FIG. 27 is a plan view of a thread provided in accordance with an example.
FIG. 28 is a top view of a thread that includes two-sided full square-sided cube-corner prism sections that are configured to retroreflect light in opposite directions along its length.
FIG. 29 is similar to the example of FIG. 28, but includes flex or break points.
FIG. 30 illustrates the thread of FIG. 28 enclosed in a tube or cladding.
FIG. 31 illustrates the thread of FIG. 29 enclosed in a tube or cladding.
FIG. 32 is a perspective view of a mold used to form one-sided square-sided cube-corner prism threads in accordance with an example.
FIG. 33 is a perspective view of a wire that includes square-sided cube-corner prism surfaces in one side of the metal in accordance with one example.
FIG. 34 is a perspective view of a wire that includes square-sided cube-corner prism surfaces in one side of the metal in accordance with another example.
FIG. 35 is a perspective view of the thread of FIG. 34 enclosed in a tube or cladding.
FIG. 36 illustrates a portion of a prior art mold used to form full square-sided retroreflecting threads, fibers, and flakes in accordance with an example.
FIG. 37 is a perspective view of an example of a mold used to form retroreflective structures.
FIG. 38 is a perspective view of another example of a mold used to form retroreflective structures.
FIG. 39 is a perspective view of yet another example of a mold used to form retroreflective structures.
FIG. 40 illustrates a portion of a prior art mold used to form full square-sided retroreflecting threads, fibers, and flakes in accordance with another example.
FIG. 41 illustrates a portion of a prior art mold used to form full square-sided retroreflecting threads, fibers, and flakes in accordance with a further example.
FIG. 42 is a perspective view of a prior art triangular-sided retroreflector.
FIG. 43 is a plan view of a sheet having triangular truncated cube-corner prisms that can be folded into an octahedron retroreflector.
FIG. 44 is a perspective view of an octahedron retroreflector provided in accordance with an example.
FIG. 45 is a partially exploded perspective view of the octahedron of FIG. 44.
FIG. 46 is a perspective view of the octahedron retroreflector of FIG. 45 enclosed in a structure in accordance with an example.
FIG. 47 is a perspective view of the octahedron retroreflector of FIG. 45 enclosed a structure in accordance with another example.
FIG. 48 is a perspective view of an open-faced full square-sided octahedron retroreflector provided in accordance with an example.
FIG. 49 is a perspective view of the octahedron retroreflector of FIG. 48 enclosed in a structure.
FIG. 50 is a perspective view of the octahedron retroreflector of FIG. 48 enclosed in another example of a structure.
FIG. 51 is a perspective view of the octahedron retroreflector of FIG. 48 enclosed in a further example of a structure.

### DETAILED DESCRIPTION OF THE INVENTION

A description of various embodiments of the invention defined by claim 1 follows.

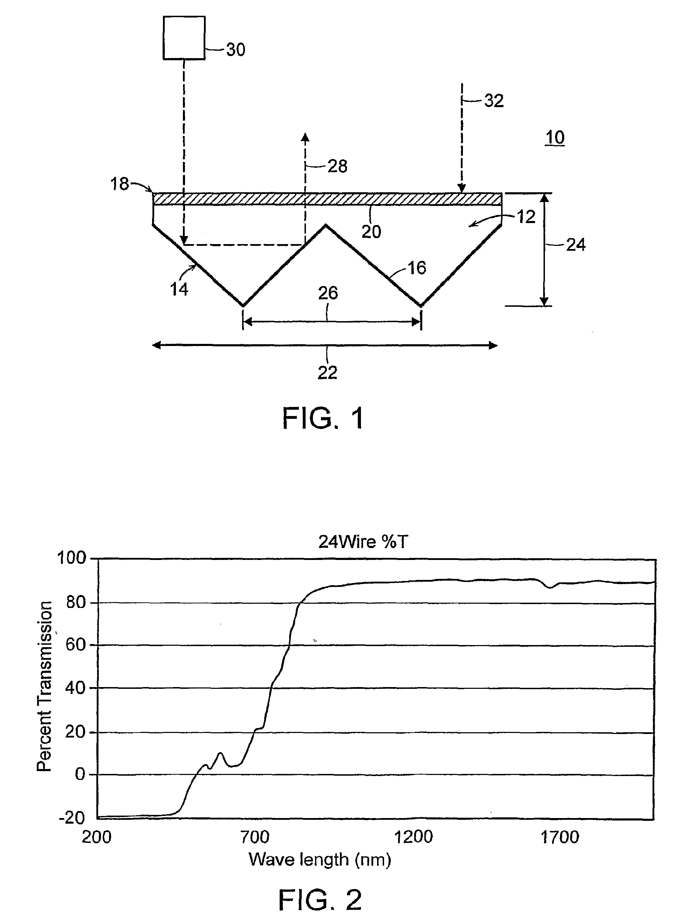

FIG. 1 is an embodiment of a retroreflective structure 10, which can be referred to as a flake or chip. The structure 10 is designed to absorb predetermined wavelengths of light, for example, midrange wavelength light, and retroreflect light having a predetermined wavelength, for example, long wavelength or short wavelength light.

The structure 10 can include cube-corner prisms 12, such as disclosed in U.S. Patent 3,684,348. A method for making retroreflective sheeting is disclosed in U.S. Patent 3,689,346. In other embodiments, the structure 10 can include plastic and/or glass beads or "cat's eye" retroreflective elements.

The prisms 12 can be formed from a material that is substantially transparent to a wavelength of a predetermined range, which can also be a range of wavelengths. In a particular embodiment, the prisms 12 can include polyethylene terephthalate (PET), polycarbonate, polymethyl methacrylate (PMMA), or other suitable materials. A specular or reflective coating 14 can be provided on the facets 16 of the prisms 12 for retroreflecting light. In a particular embodiment, the coating 14 can include aluminum, gold, or the like.

A coating 18 can be provided on the window side 20 of the prisms 12 for absorbing visible light while allowing a predetermined wavelength of light to pass therethrough. In a particular embodiment, the coating 18 includes an acrylic-based material that is about 0.00508 mm (0.0002 inches) thick. The coating 18 can be formed by mixing the following ingredients together by weight: 2.38% QUAKER 6G157; 3.71% QUAKER GR199; 0.32% QUAKER GBE186 (which are available from Quaker Color of Quakertown, Pennsylvania); 23.53% PARALOID™ B48N (which is available from Rohm and Haas Company of Philadelphia, Pennsylvania); and 70.06% ethyl acetate.

In particular embodiments, the structure 10 can have a length 22 less than about 6.35 mm (0.25 inches), a thickness 24 of about 0.127 mm (0.005 inches), and a pitch 26 of about 0.152 mm (0.006 inches). The structures 10 can have any geometric shape, such as hexagonal, square, rectangular, circular, etc., depending on the application.

The resulting structures 10 can be spread on an adhesive-coated film, mixed into adhesives, polymers, paints, coatings, etc. as disclosed in U.S. Patent Application No. 10/731,416, filed on December 9, 2003, and published as U.S. Patent Application Publication 20040169928. Each structure 10 retroreflects a first wavelength of light 28 generated by a light source 30 while absorbing another wavelength of light 32.

FIG. 2 is a graph illustrating the performance characteristics of the coating 18 of FIG. 1. The graph represents the transmission of one pass of light through the coating 18. It can be seen that there is relatively little light transmission of the visible light while the majority of the predetermined light is allowed to pass through the coating 18.

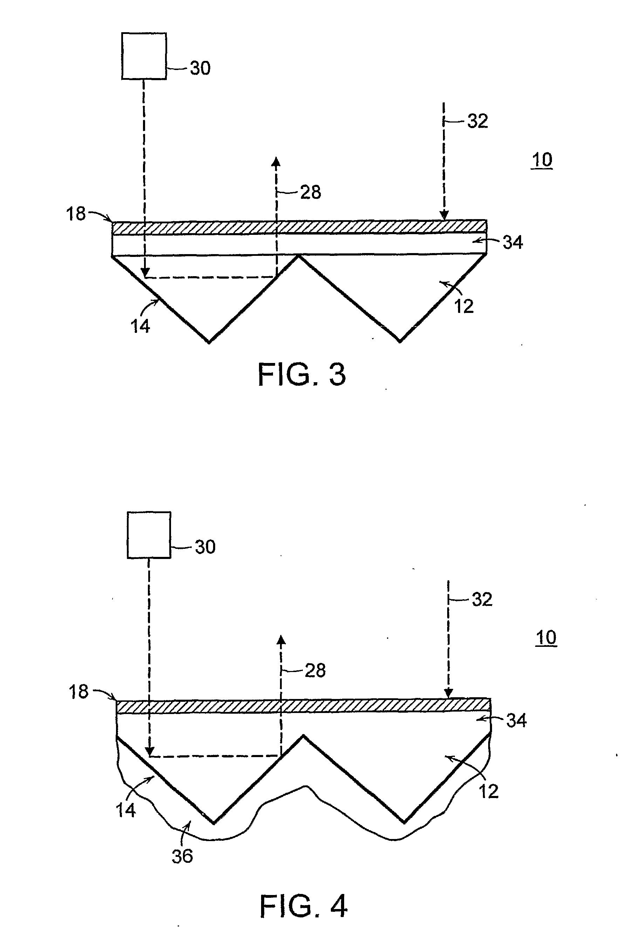

FIG. 3 is similar to the embodiment of FIG. 1 and includes a substrate 34 disposed between the coating 18 and prisms 12. The substrate can be formed from a material that is substantially transparent to predetermined wavelengths of light. In particular embodiments, the prisms 12 can include urethane or acrylic acrylate and the substrate 34 can include PET.

FIG. 4 is similar to the embodiment of FIG. 1 and includes a black matte or other suitable coating 36 on the reflective coating 14 to remove a "glitter" appearance that occurs if visible light is reflected therefrom without passing through the prisms 12.

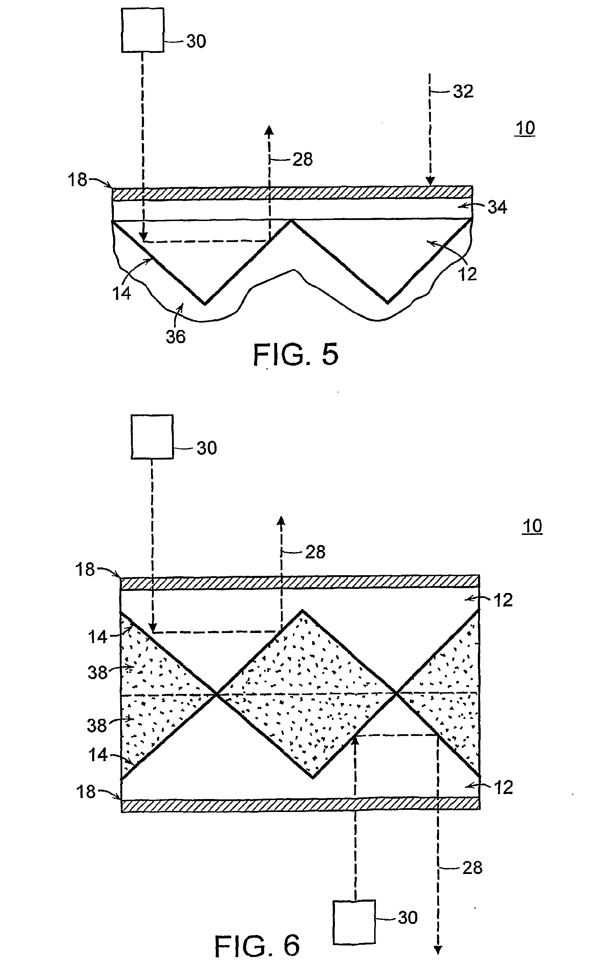

FIG. 5 is similar to the example of FIG. 4 and includes a substrate 34 disposed between the coating 18 and prisms 12.

FIG. 6 illustrates a two-sided structure 10 in which adhesive 38 is used to adhere the structures of FIG. 1 in a back-to-back relationship for retroreflecting the predetermined wavelengths of light in at least two, for example, opposite directions.

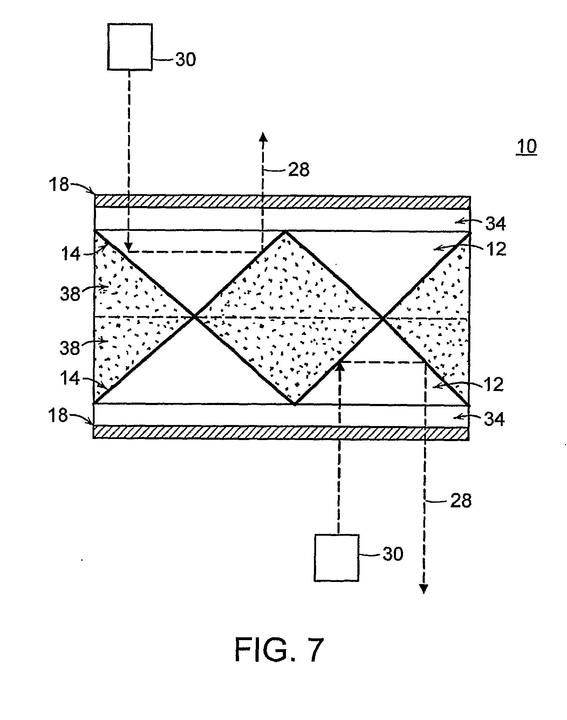

FIG. 7 is similar to the example of FIG. 6 and further includes substrates 34 between the prisms 12 and coatings 18.

In any of the embodiments, moth-eye structures can be provided on coating 18 that transmit a predetermined range of wavelengths of light and scatter a second predetermined wavelength of light. The moth-eye structures improve long wavelength transmission but appear matte or felt-like in appearance in mid to short wavelength light. Moth-eye structures are explained in more detail in U.S. Patent 6,356,389.

In a particular application for any of the examples disclosed herein, a plurality of structures 10 can be mixed with a paint or liquid and applied to a surface of an object. The object, for example 6, can be tracked for inventory control purposes.

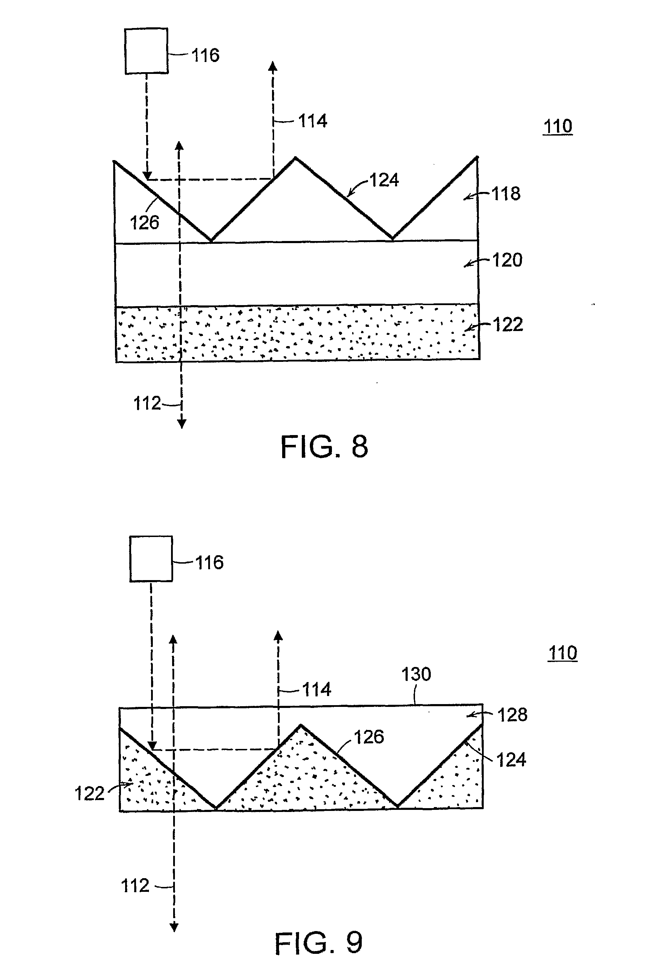

FIG. 8 is an example of a retroreflective structure 10, which can be referred to as a flake or chip. In other examples, the structure 10 can be used to form threads or fibers. The structure 110 is designed to allow first predetermined wavelengths of light to pass therethrough, for example, midrange wavelength light 112, such as visible light, and retroreflect light having a second predetermined wavelength which is different from the first predetermined wavelengths, for example, long wavelength light 114, which is produced by light source 116.

The structure 110 can include open-faced, cube-corner prisms 118, such as disclosed in U.S. Patent Application No. 2005185279. The prisms 118 can be formed from a material that is substantially transparent to visible light. In particular examples, the prisms 118 may be formed from polycarbonate, polymethyl methacrylate (PMMA), or other suitable thermoset or thermoplastic materials. The prisms 118 can be formed on a substrate 120 that is also substantially transparent to visible light. In particular examples, the substrate 120 can include the same materials as the prisms 118, or can include polyester, urethane acrylate, polyester naphthalate (PEN), or other suitable materials. In other examples, the prisms 118 and substrate 120 can be formed in one step so as to form a one-piece construction. A substantially transparent adhesive 122 can be used to attach the structure 110 to a substrate, article of clothing, etc., whose color will show through the structure 10.

A coating 124 can be provided on the facets 126 of the prisms 118 that allows the midrange wavelengths of light 112 to pass therethrough, but reflects and thus causes retroflection of longer wavelengths of light 114. In a particular example, the coating 124 is a multilayer coating that can be purchased from Precision Optical Systems, Inc. of Norwood, Massachusetts. The coating may be made with dielectric layers, with metal layers, and with combinations of dielectric and metal layers, such as the coatings used to proportion amount of light transmitted and reflected at different wavelengths. The number of coatings layers and thicknesses of the coating layers are adjusted to provide the desired light reflective range and light transmissive range. The thicknesses of the layers are generally in the range of nanometers, less than the wavelength of light. The number of layers can be in the amount of one to greater than one hundred. In further examples, a fill material that is transparent or substantially transparent to midrange and long wavelengths light can be provided on the coating 124 to protect the same.

FIG. 9 illustrates a structure 110 similar to FIG. 8, but the prisms include traditional cube-corner prisms 128, such as disclosed in U.S. Patent 3,684,348. A method for making retroreflective sheeting is disclosed in U.S. Patent 3,689,346. In other examples, the structure 110 can include plastic and/or glass beads, "cat's eye" retroreflective elements, and/or full cube-corner prisms, such as disclosed in U.S. Patent 1,955,105.

The prisms 128 can be formed from a material that is substantially transparent to midrange and long wavelength light, such as polyethylene terephthalate (PET), polycarbonate, polymethyl methacrylate, or other suitable materials. A coating 124 can be provided on the facets 126 of the prisms 128 that allows the light 112 to pass therethrough while reflecting and thus causing retroreflection of light 114. An adhesive 122 can be disposed on the coating 124 for attaching the structure 110 to a substrate.

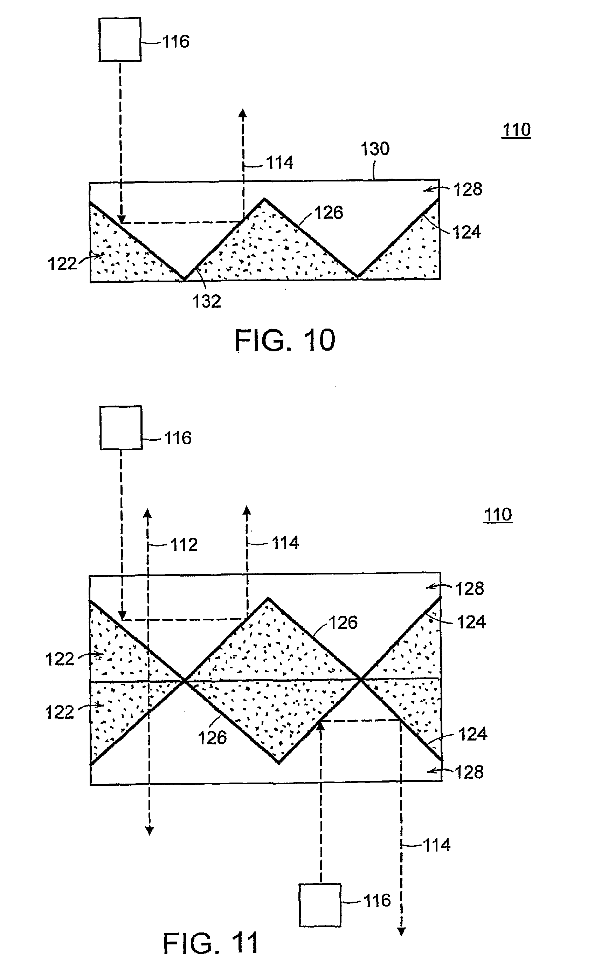

FIG. 10 illustrates a structure 110 that includes cube-corner prisms 128 having an optical coating 132 on the facets 126. The coating 132 can include a specular or reflective coating for retroreflecting light. In a particular example, the coating 132 can include aluminum, gold, or the like. The prisms 128 can be formed from a material that is substantially transparent to one range of wavelengths of light 114 and/or a second range of wavelengths of light 112.

A coating can be provided on the window side 130 of the prisms 128 for absorbing visible light while allowing a predetermined range of wavelengths of light to pass therethrough. In a particular embodiment, the coating includes an acrylic-based material that is described above for coating 18.

FIG. 11 illustrates a two-sided retroreflective structure 110 in which cube-corner prisms 128 having a coating 124 on the facets 126 are arranged in a back-to-back relationship such that predetermined wavelength of light 114 is retroreflected in at least two, for example, opposite directions. A substantially transparent adhesive 122 can be used to adhere the prisms 128 together. These structures 110 can be mixed into an short to long wavelength transmitting coating or resin and applied to an object, garment, etc.

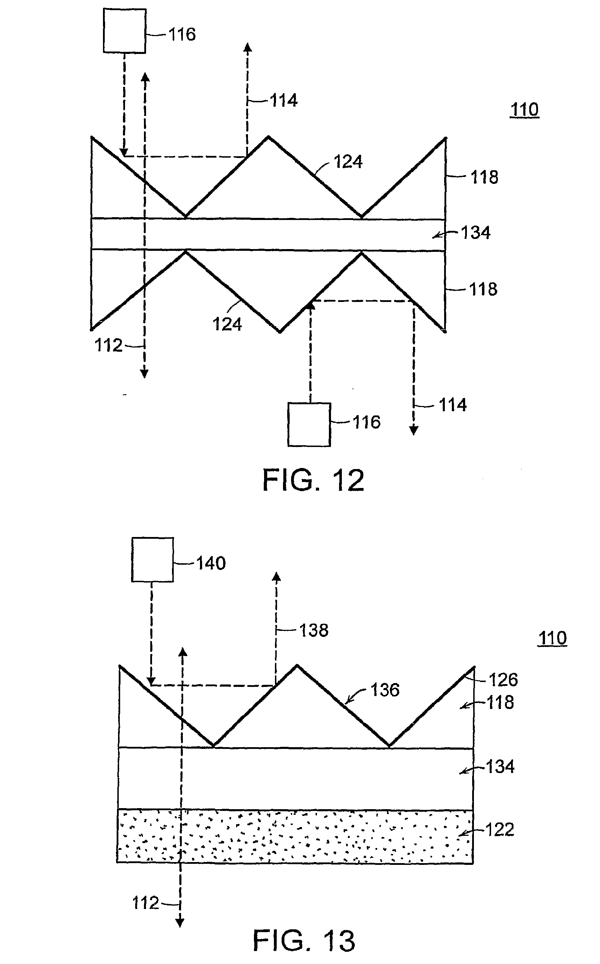

FIG. 12 illustrates a two-sided retroreflective structure 110 that includes open-faced, cube-corner prisms 118 arranged in a back-to-back relationship such that a predetermined wavelength range of light 114 is retroreflected in opposite directions. The prisms 118 can be formed on opposite sides of a substrate 134 that is substantially transparent to a second predetermined wavelength of light. Again, the structures 110 can be mixed into an light transmitting resin.

FIG. 13 illustrates a retroreflective structure 110 similar to the example of FIG. 8. In this example, a coating 136 on the facets 126 is configured to retroreflect a predetermined wavelength of light 138 generated by an predetermined wavelength light source 140 while allowing visible light 112 to pass therethrough. In one example, the coating 136 is designed by Precision Optical Systems, Inc. and is designed to reflect short wavelength light having a predetermined wavelength, or range of wavelengths.

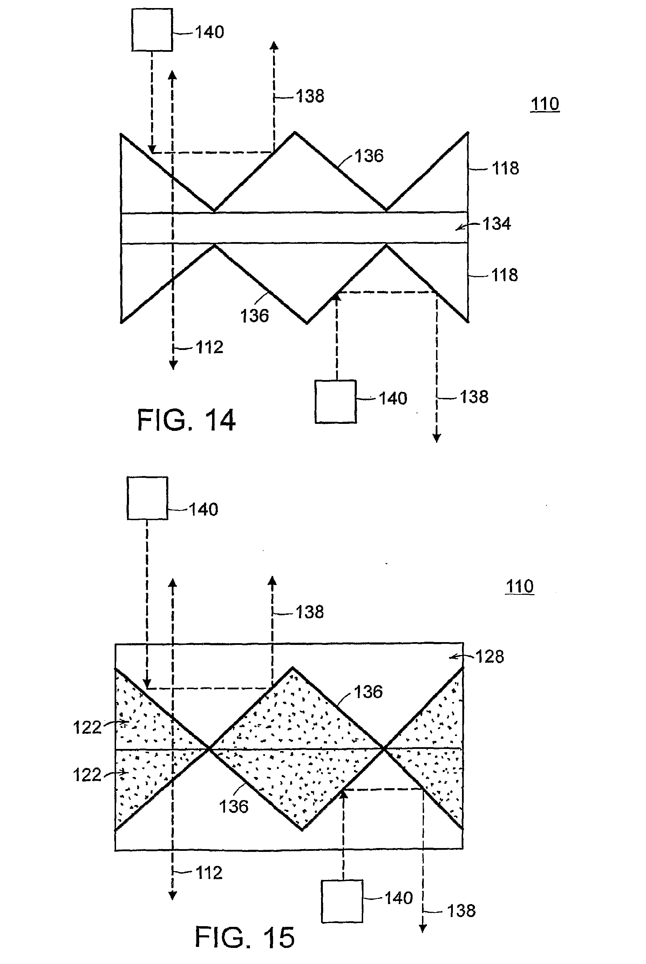

FIG. 14 is a two-sided retroreflective structure 110 that includes open-faced prisms 18 disposed on opposite sides of substrate 134. Coating 136 is provided on the prisms 118 to cause retroreflection of a predetermined wavelength of light 138 in opposite directions while allowing second predetermined light 112 to pass therethrough. FIG. 15 is a two-sided retroreflective structure 110 similar to the example of FIG. 11. In this example, coating 136 is provided on the prisms 118 which causes retroreflection of the predetermined light 138 while allowing second predetermined light 112 to pass therethrough.

The resulting structures of any of the examples disclosed herein can be spread on an adhesive-coated film, mixed into adhesives, polymers, paints, coatings, etc. In any of the examples, moth-eye structures can be provided on the window side 130.

In a particular application for any of the examples disclosed herein, a plurality of structures 110 can be mixed with a paint or liquid and applied to a surface of an object that can be visible. The object, which for example may be merchandise or a shipping container, can be tracked for inventory control purposes.

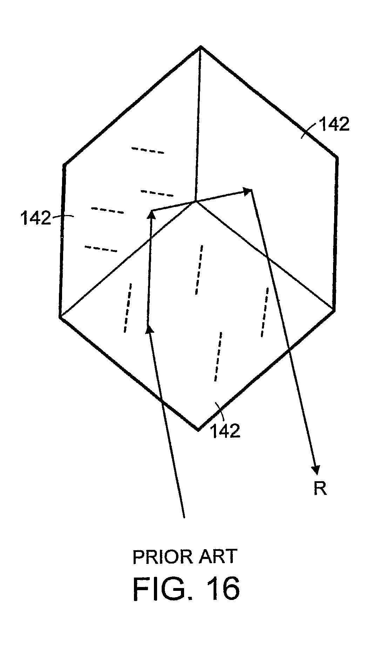

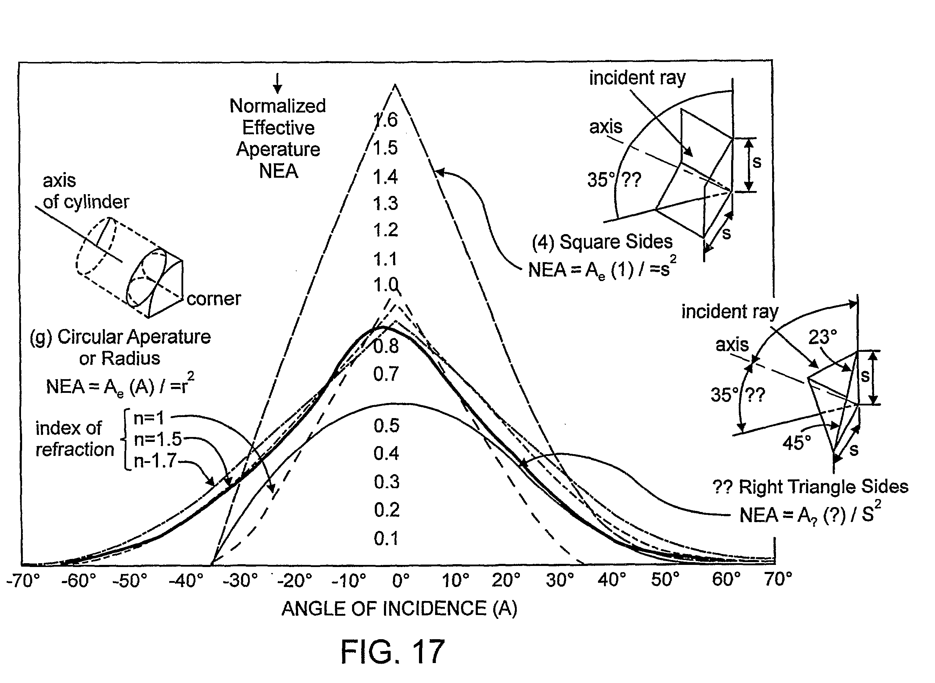

FIG. 16 is a top view of a conventional full or square-sided cube-corner prism that is used to retroreflect light by having mutually perpendicular faces 142. FIG. 17 represents an increase in effective aperture of a square-sided cube-corner prism over a triangular-sided cube-corner prism and a conical cube-corner prism.

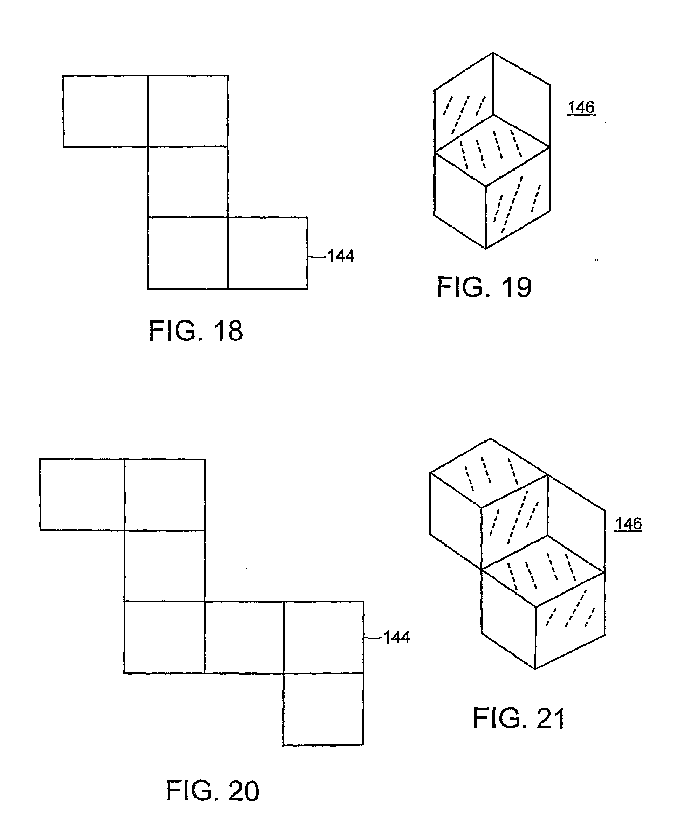

FIG. 18 is a plan view of a sheet 44, which can include, for example, polished metal or a polymer, that can be folded to form a two-sided open-faced retroreflective flake or chip 146 (FIG. 19) using progressive die processes. The example of FIG. 19 includes at least five reflecting faces and retroreflects light in opposite directions. The thickness of the sheet 144 can vary depending on the desired application and strength of the material of the sheet. Multiple-flakes 146 can be used as dust or mixed into resins, paints, coatings, etc.

Thermoplastic polymer sheets, such as polycarbonate (PC), polymethyl methacrylate, cyclic olefin copolymers (COCs), or other suitable polymers, can be formed into cube-corner prism structures using thermoforming processes. Thermoplastic polymers can also be molded into a desired cube-corner prism shape using appropriate compression, compression injection or injection micro-molding processes. Micro-molding techniques can produce as many as 500 flakes from one pellet of thermoplastic. In addition, thermoset polymers, such as ultraviolet-curable acrylic acrylates and urethane acrylates can be cast into the desired cube-corner prism shapes using a stepped micro-casting process.

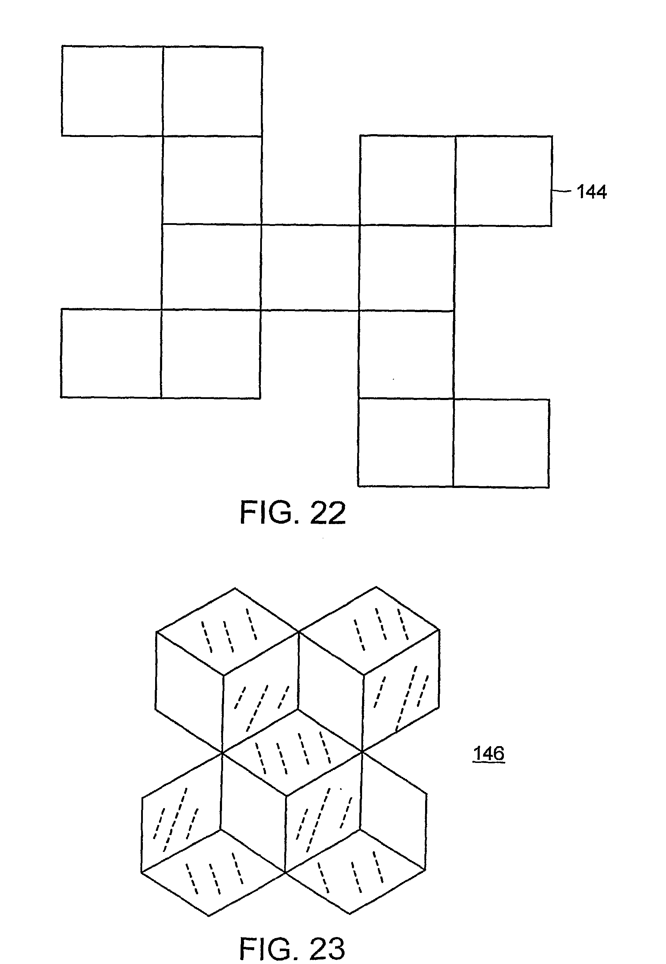

FIGS. 20 and 21 are similar to the examples of FIGS. 18 and 19 but the resulting flake 146 includes at least seven reflecting faces. FIGS. 22 and 23 are similar to the examples of FIGS. 18 and 19 but the resulting flake 146 includes at least thirteen reflecting faces.

In any of the examples, a predetermined wavelength reflecting coating that is substantially transparent to a second predetermined wavelength range of light can be provided on the reflecting facets of flake 146, which is formed from a resin that is substantially transparent to a predetermined range of wavelengths of light. The flake 146 of this size or larger lands flat and functions as a retroreflecting dust. The flake 146 retroreflects a predetermined wavelength range of light upside down and right side up. Additionally, a substantially transparent adhesive can be applied to one side of the flake 146 to bond it to an article, object, garment, etc.

In other examples, a predetermined wavelength range reflecting coating that is substantially transparent to a second predetermined wavelength range of light can be applied to both sides of the flake 146, which is configured to be substantially black or colored. The flake 146 of this size or larger lands flat and functions as a black retroreflecting dust. The flake 146 retroreflects one predetermined wavelength range of light upside down and right side up. In further examples, a black or colored adhesive can be applied to one side to bond the flake 146 to an article, object, garment, etc.

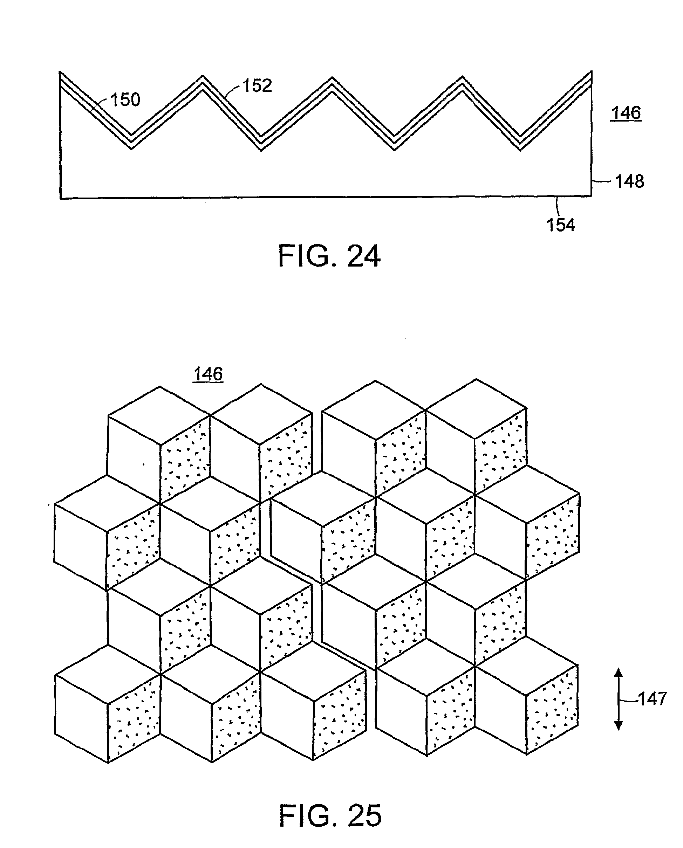

FIG. 24 is a cross-sectional view of a flake 146 in which the body 148 is formed from a black or colored material that is able to transmit predetermined wavelengths of light. Full open-faced, cube-corner prisms are molded or formed on one side the material leaving one surface planar. In other examples, the body 148 can be formed from an opaque or colored material that can include different materials, such as tints, dyes, etc. that provide transmission at specific wavelength(s) of light. In this example, a first layer 150 is provided on a first side of the flake 146 and is formed from a material that can reflect a predetermined wavelength of light. A second layer 152 can be provided on the first layer 150 that is transmissive to predetermined wavelengths of light. Thus, both the predetermined wavelengths of light are retroreflected from the top of the flake 146. The predetermined wavelength of light directed at the bottom of the flake 146 is also retroreflected by layer 150. In other examples, a moth-eye structure can be provided on surface 154 to achieve a gloss-free surface.

FIG. 25 is a plan view of full square sided, two-sided cube-corner prism flakes 146 that are molded or cast into breakable metal or polymer sections of material. The sections can be made to have breakable boundaries by perforating the intersecting line during formation or forming the intersecting line as a very thin breakable boundary. The flakes 146 can be thermoformed or compression formed into sheets. The mold can have thin sections that makes it possible to break into sections. In one example, the prisms have a length 147 along one side of between about 0.101 and 0.203 mm (0.004 and 0.008 inches).

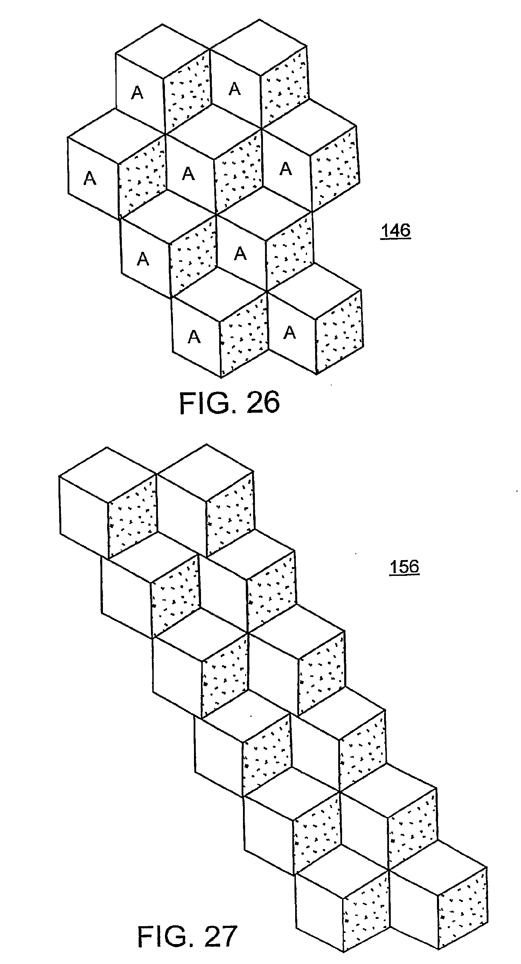

FIG. 26 is a plan view of a flake 46 that has a security Aztec structure, which was developed by Dr. James Cowan, on a surface A of the facets. Aztec light resonating structures are described in Cowan, James J" "Aztek Surface-Relief Volume Diffractive Structure," Journal of the Optical Society of America A, 7(8): 1529-1544 (1990). The Aztec image is only visible in certain wavelengths, such as ultraviolet visible light, but not visible at other wavelengths. This provides a way to check the authenticity of the article.

FIG. 27 is a plan view of a two-sided square-sided cube-corner prism structure made in the form of a fiber or thread 156 that can be coated with a reflective coating(s). The reflective coating(s) can be designed to make it retroreflective predetermined wavelengths of light. The thread 156 can also be enclosed in a substantially transparent tube or cladding. The tube or cladding can be thermoplastic-transparent to the desired retroreflection wavelengths and can be applied using a cross-head extrusion die process. In other examples, the cladding can be a thermoset material that is applied using a cross-head flow die process. Any of the threads disclosed herein can have multiple variations of coated cube-corner prism structures to create a brightness or color code that can be random or regular, binary, or the like. The code on the thread can be read by a hyperspectral scanner or other like decoding device. Examples of the security thread can be woven into currency or documents to prevent counterfeiting. Copiers are not able to duplicate the color or structure in copied documents. The thread can be made into polymer fibers that are dispersed into the pulp fibers used during paper manufacturing runs to create a counterfeit proof paper. The fibers can also be placed in a pattern on the pre-paper web to create a water mark.

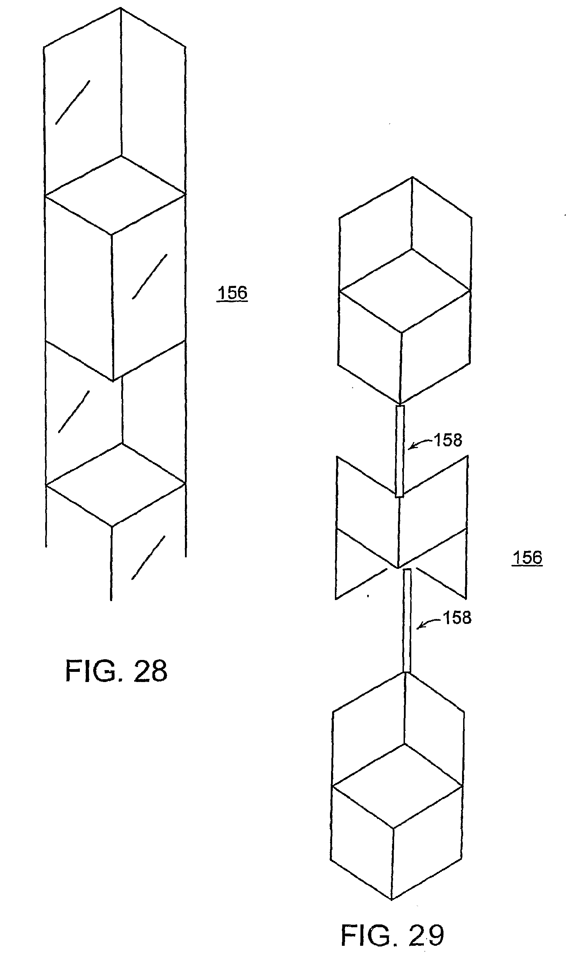

FIG. 28 is a top view of a thread 156 that includes two-sided open-faced full square-sided cube-corner prism sections that retroreflect light in opposite directions along the length of the thread. FIG. 29 is similar to the example of FIG. 28, but includes flex or break points 158. The threads 156 in any of the examples disclosed herein can be made with metal or polymer forming processes.

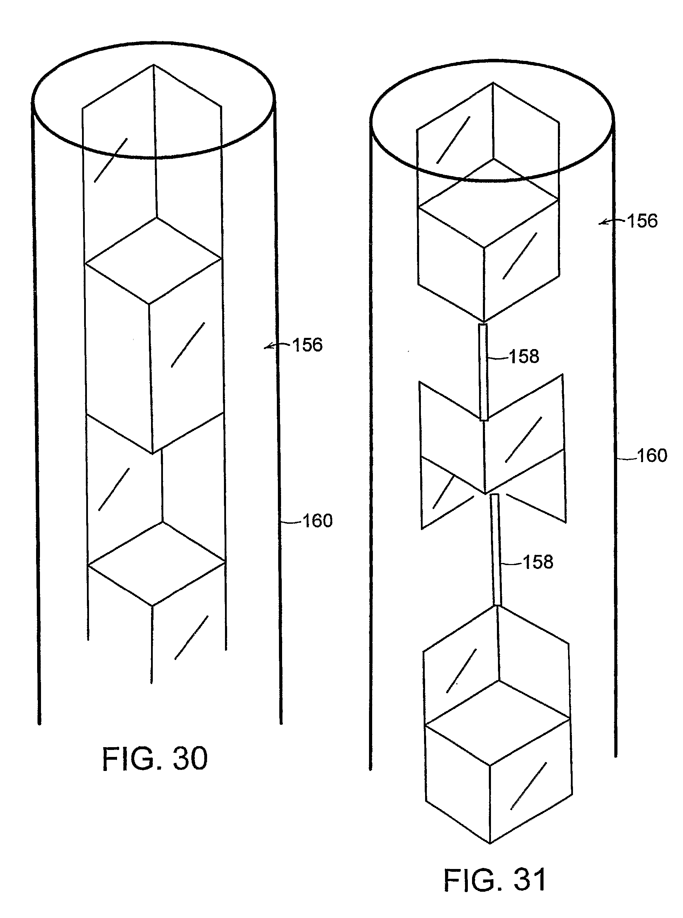

FIGS. 30 and 31 illustrate the threads 156 of FIGS. 28 and 29 enclosed in a tube or cladding 160. The threads 156 can be covered with coatings which are designed to transmit and/or reflect predetermined wavelengths of light. The thin walls of the cube-corner prism structure 156 can include twist areas to provide an air-backed retroreflective thread. In one example, the cladding 160 includes a thermoplastic material and is transparent to the desired retroreflection wavelengths and is applied using a cross-head extrusion die process. In further examples, the cladding 160 can include a thermoset material that is applied using a cross-head flow die process.

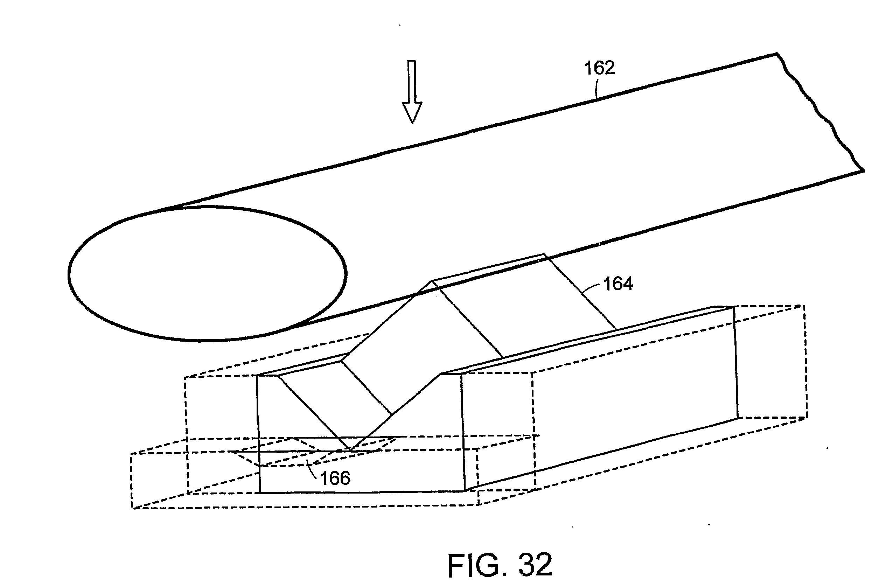

FIGS. 32, 33, 34, and 35 illustrate a method and associated tooling for forming a one-sided full square sided cube-corner prism thread out of polished aluminum wire. The finished cube-corner prism thread can be twisted as a cladding is applied to achieve retroreflection from all angles. Reflective coatings can be used to enhance the reflection from the cube-corner prism facets. When the aluminum thread is enclosed in a transparent tube with an indium tin oxide (ITO)-transparent conductive coating on the inside of the tube and the tube is filled with a liquid crystal (LC) material that can shift refractive index with a change in the potential difference across the aluminum wire and the ITO coating, a variable retroreflective thread is created. At one refractive index value the cube-corner prisms have excellent wide entrance angle performance. At a second refractive index the cube-corner prisms have excellent narrow entrance angle performance.

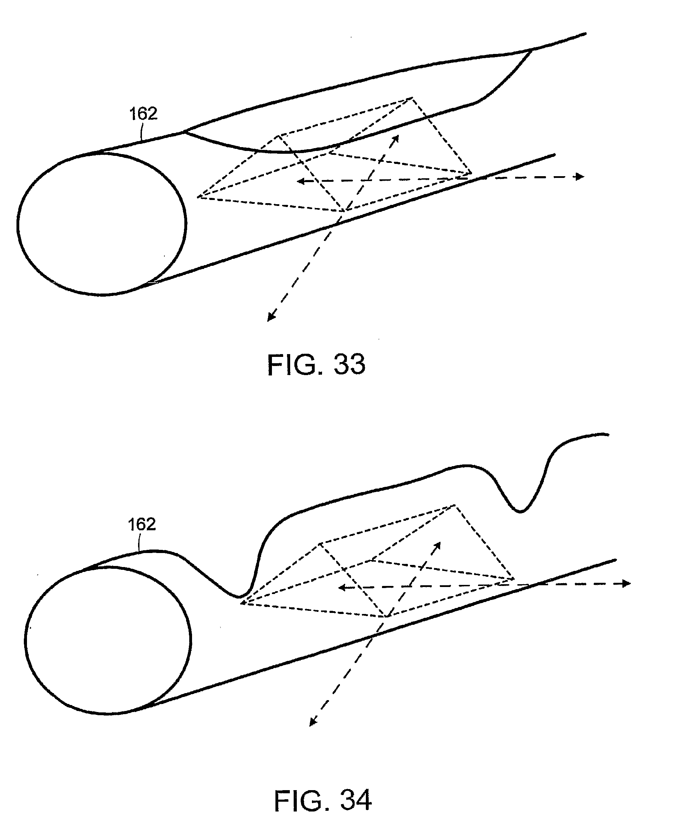

FIG. 32 illustrates the wire 162, which can include an aluminum wire having a diameter of about 0.076 mm (0.003 inch) or a polished sheet, being positioned above a mold 164, which can include areas 166 to create connecting links. The connectors link the formed structures together to allow efficient continuous application of the reflective coatings that can be used to achieve high levels of retroreflectivity. FIG. 33 illustrates the wire 162 that has been forced on the mold 64 to form two opposing open-faced, cube-corner prisms. FIG. 34 is similar to FIG. 33, but the wire 162 has a diameter of about 0.153 mm (0.006 inch). FIG. 28 illustrates the tube or cladding 160 enclosing the wire 162 to protect the same and improve the entrance angle of light. The cladding 160 can be hollow or solid and be substantially transparent.

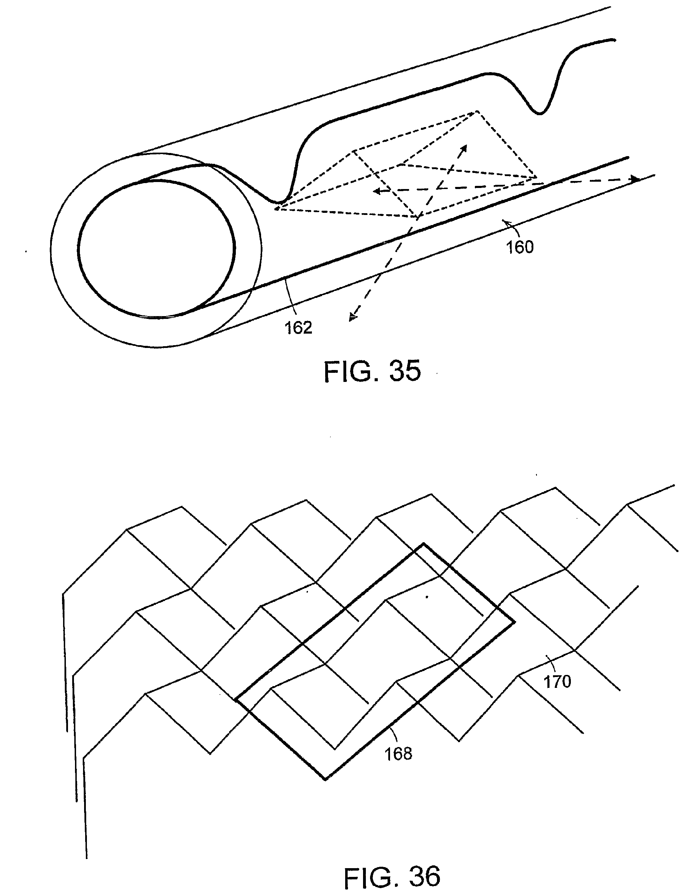

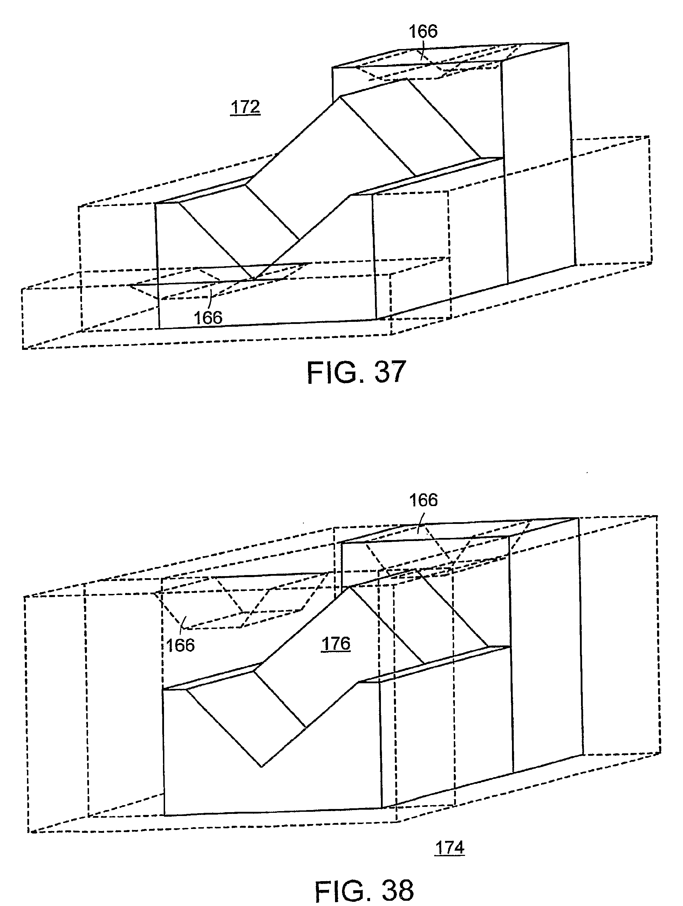

FIG. 36 illustrates a portion 168 of a prior art mold 170 that can be used to make full square-sided retroreflecting threads, fibers, and flakes as described herein. FIG. 37 is a perspective view of a mold 172, which can be formed from metal, that can be used to form retroreflective structures. The portion of the mold 172 outlined in phantom lines can include connecting links 166. Micro-molding techniques can be used to form retroreflective structures. After the thread, fiber, or flake is formed in the mold 172 in a step-and-repeat process, the structure can be coated with a specular or reflective coating, such as metal and coatings which reflect a predetermined wavelength range of light and transmit another predetermined wavelength range of light.

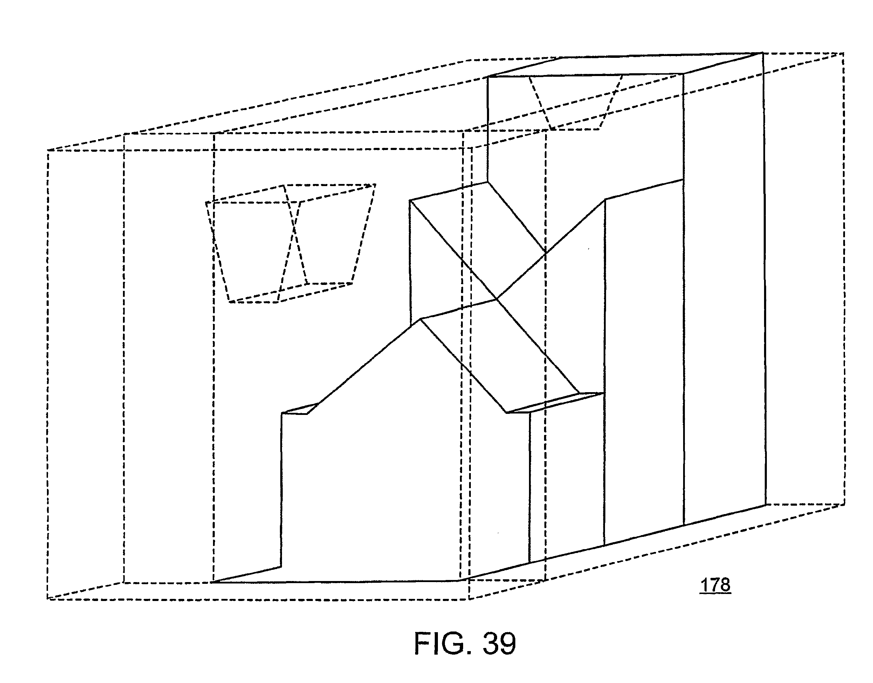

FIG. 38 is a perspective view of another example of a mold 174, which can be formed from metal or ceramic including glass, that can be used to make the full square-sided retroreflecting threads, fibers, and flakes as described herein. The mold 174 can include a mold cavity 176 that can be filled with a polymer and a top film with a releasable bond can be laminated to the cube-corner prism structure as it is cured. In particular examples, connectors 166 can be provided in the mold 174. FIG. 39 is a perspective view of a mold 178 that is the reverse of the mold 174 shown in FIG. 38.

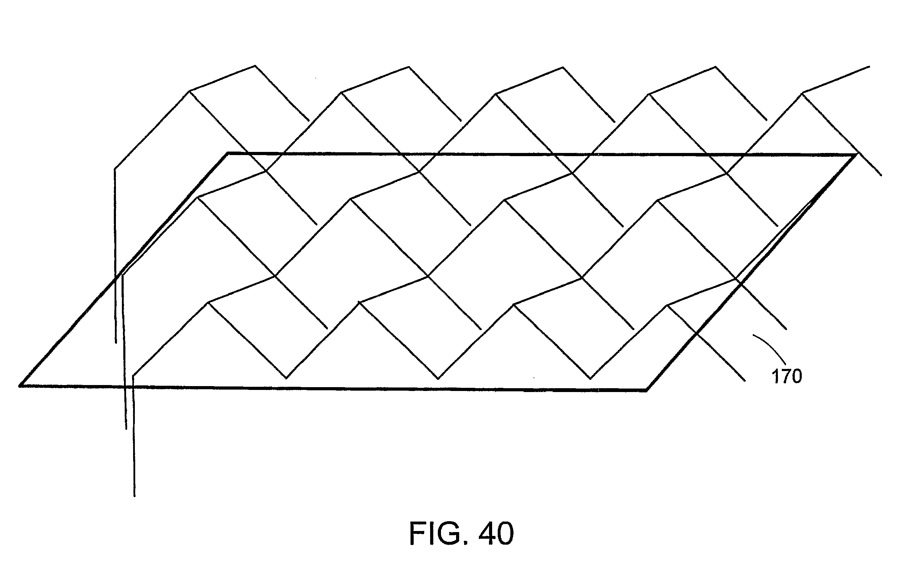

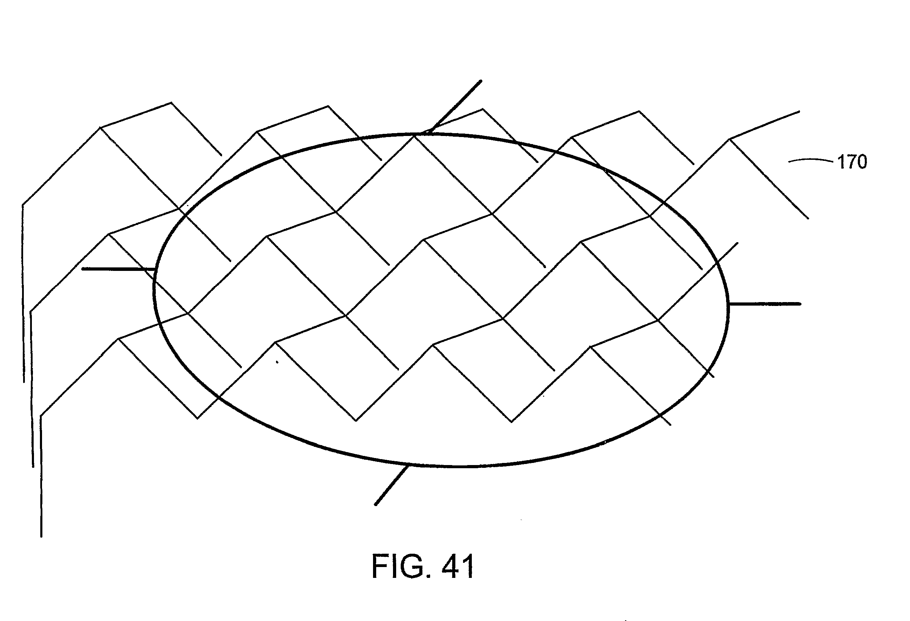

FIGS. 40 and 41 show the size and shape of the tooling that can be used to make full square-sided retroreflecting flakes. The flakes can have a breakable junction between adjacent flakes. In a particular example, the junction is such that the flakes can be cycled through coating processes prior to being separated into separate flakes that can be mixed into coatings, paints, resins, polymers, fabrics, papers, adhesives, binders and the like.

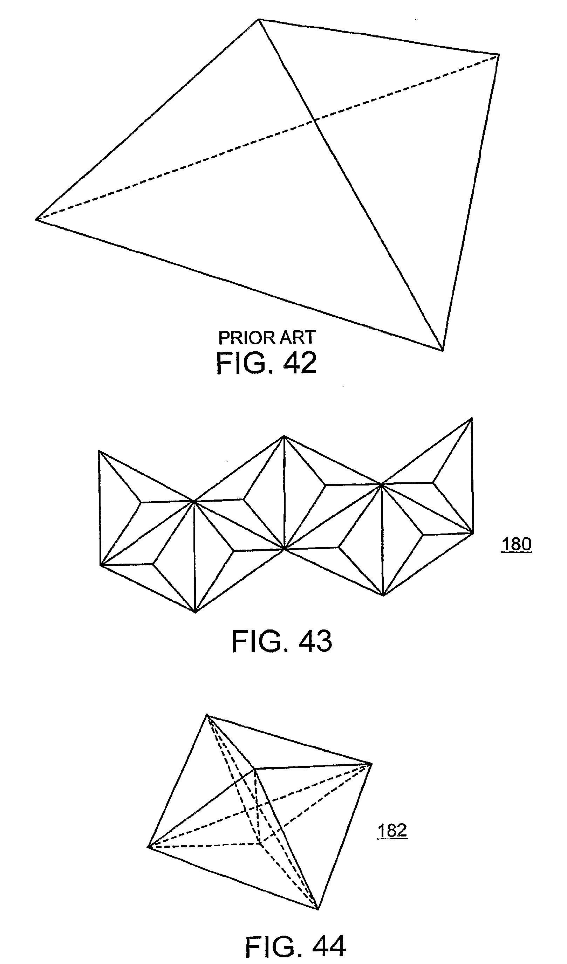

FIG. 42 is a perspective view of a prior art triangular-sided retroreflector. An octahedron retroreflector can be made with solid or open-faced, truncated cube-corner prisms. The reflective coating concepts discussed herein can be used with octahedron retroreflectors.

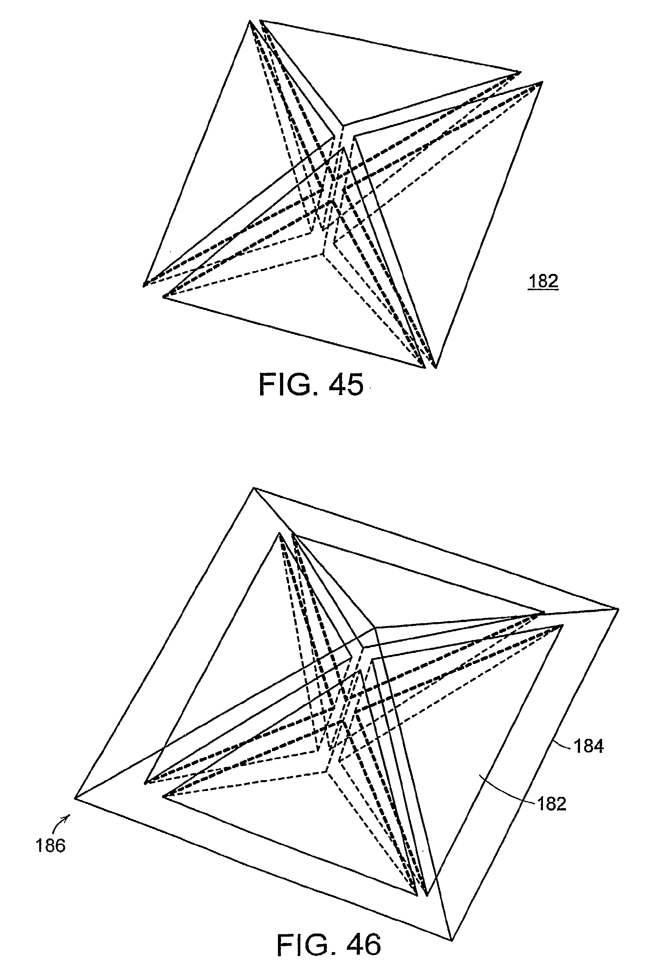

FIG. 43 is a plan view of a structure 180 that includes eight triangular sided cube-corner prism sections that can be folded into an octahedron retroreflector 82, which is illustrated in FIGS. 44 and 45. The cube-corner prism sections can be formed from, for example, metal or a polymer that has a reflective coating on the facets.

Thin-walled cube-corner prism retroreflecting octahedrons 182 can be made by forming metal or polymers. Thin polished metal such as polished aluminum sheet can be formed into cube-corner prism flakes using progressive die processes. Thermoplastic polymer sheets, such as polycarbonate, polymethyl methacrylate, cyclic olefin copolymers, or other suitable materials, can be formed into cube-corner prism structures using thermoforming processes. Thermoplastic polymers can also be molded into the desired cube-corner prism shapes using appropriate compression, compression injection or injection micro-molding processes. Micro-molding techniques can be used to produce as many as 500 octahedrons from one pellet of thermoplastic. In addition, thermoset polymers, such as ultraviolet-curable acrylic acrylates and urethane acrylates, can be cast into the desired cube-corner prism shapes using a stepped micro-casting process.

After forming the cube-corner prism pattern shown in FIG. 43, the structure is folded into an octahedron 182 and can be held in place by an adhesive. The cube-corner prisms can also be molded as solid cube-corner prisms and then folded into an octahedron 182. The facet surfaces of the cube-corner prisms can be coated with coatings which reflect and transmit in predetermined wavelengths ranges of light octahedrons 82 that can be mixed into coatings, paints, resins, polymers, fabrics, papers, adhesives, binders and the like.

In other examples, an octahedron can be formed by providing bumps or differential height locators, as disclosed in U.S. Application No. 10/830,701, filed on April 23, 2004, and published as U.S. Patent Application Publication 20040246599, on the facets of the cube-corner prisms. When the cube-corner prisms are folded into an octahedron, an air-space is provided between the prism facets to form an air-backed structure.

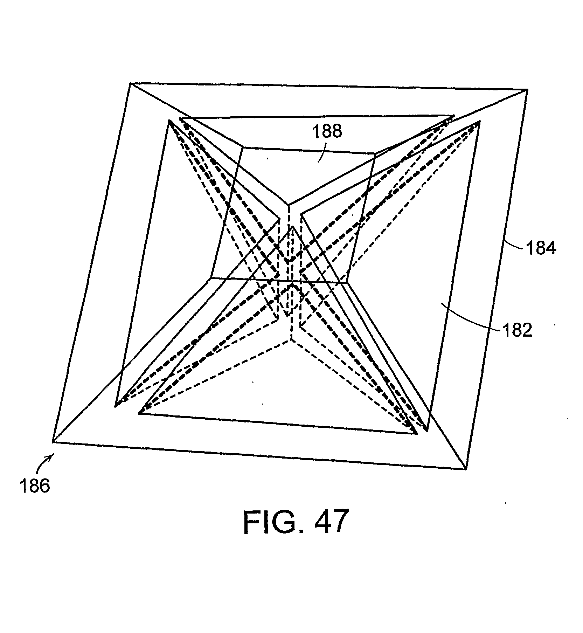

FIG. 40 illustrates an octahedron 182 that has been enclosed in a hollow or solid transparent structure 184, which can be used to protect the octahedron and improve the light entrance angles. In particular examples, the corners 186 can be rounded to remove the sharp points. In other examples, moth-eye structures can be provided on the outer surface of the structure 184 to reduce visible light surface gloss. In further examples, the structure 184 can be formed from materials which are opaque to a predetermined range of wavelengths of light and are transparent to a second or third predetermined wavelength range of light. FIG. 47 is similar to the example of FIG. 46, but includes a flattened-portion 188 on the top and bottom of the structure 184.

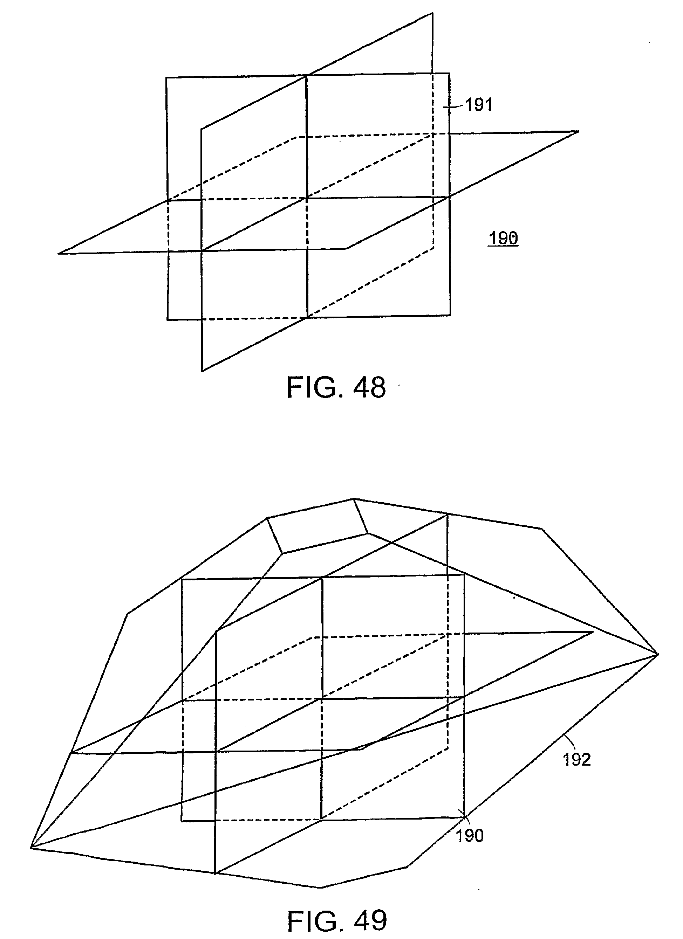

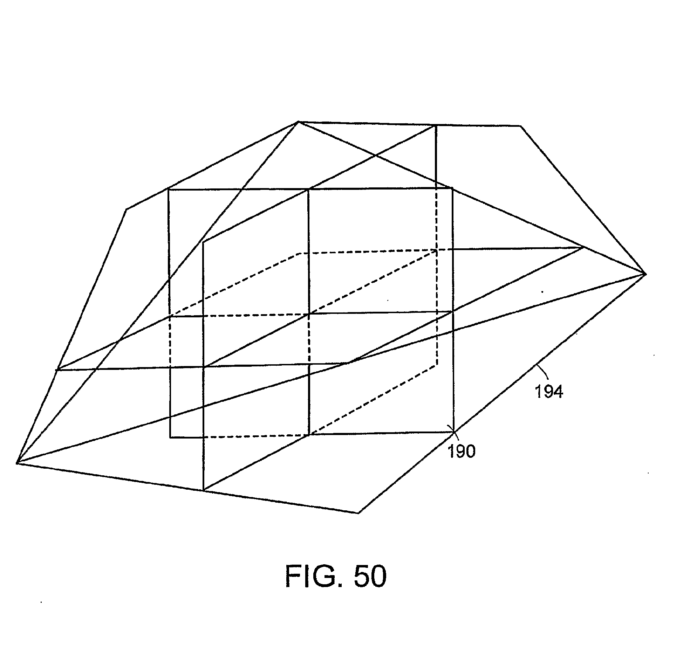

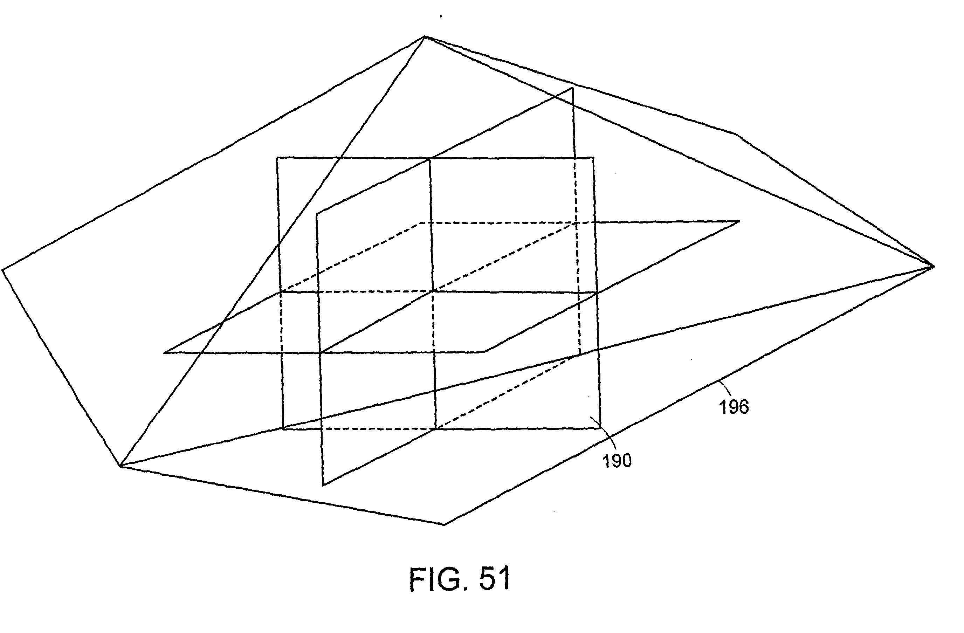

FIG. 48 is a perspective view of an open-faced full square-sided octahedron retroreflector 190, which includes surfaces 191 that can include a specular or reflective coating thereon. FIGS. 49, 50 and 51 illustrate the octahedron retroreflector 190 enclosed in structures 192, 194, 196, respectively. The structures 192, 194, and 196 protect the retroreflector 190 and increase the active area thereof.

In any of the examples, coatings can be used to create a colored appearance. Flakes, chips, or fibers of the present application can be of any shape such as square, triangular, hexagonal, rectangular, circular, and the like. The shape can be chosen to suit the application. The flakes can be used individually to mark objects or can be mixed into paints, coatings, resins, polymers, binders, adhesive, paste and the like to create a medium that can be sprayed, painted, screen printed, gravure coated, offset printed, painted, and the like onto any surface. The surface can be a fabric, a metal, a glass, a ceramic, a stone, a cement, a polymer and the like.

Any combination of retroreflected light performance can be created by mixing flakes having different cube-corner prism features or making the flakes to have more than one design of cube-corner prism structures on a single flake.

One side of the flake can be configured with a specific cube-corner prism size structure or combination of cube-corner prism structures and the other side of the flake can be configured with a second cube-corner prism size structure or combination of cube-corner prism size structures.

In general, any object can be made to have a covering of cube-corner prism structures. The covering can be in the form of a fabric, a coating, a sheet, a paste, a tape, or the like. The cube-corner prism structures can be tunable to create varying entrance angle performance. The cube-corner prism structures can be arranged to create multiple colors in any arrangement of color. In other examples, the cube-corner prism structures can be invisible at predetermined wavelengths.

The film, thread or flake of the present application can be configured to have Aztec structures on one side of the film, thread or flake and have another micro-optical structure, such as an open-faced, cube-corner prism structure, on the other side of the film, thread or flake. Micro-optical structures can include open-faced, cube-corner prisms, gratings, moth-eye structures, lens arrays, lenticular prisms or lenses, and the like. Any micro-optical structure that refracts or reflects light can be used.

The thread or flake can be configured to have cube-corner prism structures on one section of the thread or flake and have another micro-optical structure, such as an Aztec structure, on another section of the other side of the thread or flake. Any micro-optical structure that refracts or reflects light can be used.

While this invention has been particularly shown and described with references to various embodiments thereof, it will be understood by those skilled in the art that various changes in form and details may be made therein without departing from the scope of the invention encompassed by the appended claims.

## Claims

1. A retroreflective structure (110) comprising:
a first plurality of solid cube corner prisms with a window side (130) and facet surfaces (126) configured to retroreflect light; and
a specular or reflective coating (124) on the facet surfaces (126) configured to reflect a first predetermined wavelength or range of wavelengths of light while allowing a second predetermined wavelength or range of wavelengths to pass therethrough, and
a coating on the window side (130) configured to absorb visible light while allowing a predetermined wavelength or range of wavelengths to pass therethrough to be retroreflected by the solid cube-corner prisms.

2. The structure (110) of Claim 1, further comprising
a second plurality of solid cube corner prisms with facet surfaces configured to retroreflect light and a specular or reflective coating (124) on the facet surfaces (126) of the second plurality of solid cube corner prisms configured to reflect a first predetermined wavelength or range of wavelengths of light while allowing a second predetermined wavelength or range of wavelengths to pass therethrough, the first and second plurality of solid cube corner prisms being configured to retroreflect light in at least two directions, wherein the first and second plurality of solid cube corner prisms are arranged in a back-to-back relationship so as to retroreflect light in opposite directions.

3. A method of identifying an object, comprising:
attaching a structure (110) according to claim 1 to a surface of the object, the retroreflective structure being configured to retroreflect light having a predetermined wavelength;
directing light having the predetermined wavelength at the retroreflective structure; and
detecting the retroreflected light.

4. The method of Claim 3, wherein the retroreflective structures (110) are configured to retroreflect light having the predetermined wavelength in at least two directions.

## Patentansprüche

1. Rückstrahlende Struktur (110), welche aufweist:
mehrere erste massive kubische Winkelprismen mit einer Fensterseite (130) und Facettenflächen (126), die konfiguriert sind, Licht zurückzustrahlen; und
eine spiegelnde oder reflektierende Beschichtung (124) auf den Facettenflächen (126), die konfiguriert ist, eine erste vorbestimmte Wellenlänge oder einen Bereich von Wellenlängen von Licht zu reflektieren, während einer zweiten vorbestimmten Wellenlänge oder einem Bereich von Wellenlängen ermöglicht wird, durch sie hindurchzugehen, und
eine Beschichtung auf der Fensterseite (130), die konfiguriert ist, sichtbares Licht zu absorbieren, während einer vorbestimmten Wellenlänge oder einem Bereich von Wellenlängen ermöglicht wird, durch sie hindurchzugehen, um durch die massiven kubischen Winkelprismen zurückgestrahlt zu werden.

2. Struktur (110) nach Anspruch 1, weiterhin aufweisend:
mehrere zweite massive kubische Winkelprismen mit Facettenflächen, die konfiguriert sind, Licht zurückzustrahlen, und einer spiegelnden oder reflektierenden Beschichtung (124) auf den Facettenflächen (126) der mehreren zweiten massiven kubischen Winkelprismen, die konfiguriert sind, eine erste vorbestimmte Wellenlänge oder einen Bereich von Wellenlängen von Licht zu reflektieren, während einer zweiten vorbestimmten Wellenlänge oder einem Bereich von Wellenlängen ermöglicht wird, durch sie hindurchzugehen, während die mehreren ersten und mehreren zweiten massiven kubischen Winkelprismen konfiguriert sind, Licht in zumindest zwei Richtungen zurückzustrahlen, wobei die mehreren ersten und mehreren zweiten massiven kubischen Winkelprismen in einer Rücken-an-Rücken-Beziehung angeordnet sind, um Licht in entgegengesetzten Richtungen zurückzustrahlen.

3. Verfahren zum Identifizieren eines Objekts, welches aufweist:
Anbringen einer Struktur (110) nach Anspruch 1 an einer Oberfläche des Objekts, wobei die rückstrahlende Struktur konfiguriert ist, Licht mit einer vorbestimmten Wellenlänge zurückzustrahlen;
Richten von Licht mit der vorbestimmten Wellenlänge auf die zurückstrahlende Struktur; und
Erfassen des zurückgestrahlten Lichts.

4. Verfahren nach Anspruch 3, bei dem die rückstrahlenden Strukturen (110) konfiguriert sind, Licht mit der vorbestimmten Wellenlänge in zumindest zwei Richtungen zurückzustrahlen.

## Revendications

1. Structure rétro-réfléchissante (110) comprenant :
une première pluralité de prismes en coin sous forme de cubes solides munis de surfaces de côté en fenêtre (130) et en facettes (126) configurées pour rétro-réfléchir la lumière ; et
un revêtement spéculaire ou réfléchissant (124) sur les surfaces en facettes (126) configuré pour réfléchir une première longueur d'onde ou plage de longueurs d'onde de lumière prédéterminée tout en laissant passer au travers une seconde longueur d'onde ou plage de longueurs d'onde prédéterminée ; et
un revêtement sur le côté en fenêtre (130) configuré pour absorber la lumière visible tout en laissant passer au travers une longueur d'onde ou plage de longueurs d'onde prédéterminée afin qu'elle soit rétro-réfléchie par les prismes en coin sous formes de cubes solides.

2. Structure (110) selon la revendication 1, comprenant en outre :
une seconde pluralité de prismes en coin sous forme de cubes solides munis de surfaces en facettes configurées pour rétro-réfléchir la lumière et d'un revêtement spéculaire ou réfléchissant (124) sur les surfaces en facettes (126) de la seconde pluralité de prismes en coin sous forme de cubes solides configuré pour réfléchir une première longueur d'onde ou plage de longueurs d'onde de lumière prédéterminée tout en laissant passer au travers une seconde longueur d'onde ou plage de longueurs d'onde de lumière prédéterminée, les prismes en coin des première et seconde pluralités de prismes en coin sous forme de cubes solides étant configurés pour rétro-réfléchir la lumière dans au moins deux directions, dans lequel les prismes en coin des première et seconde pluralité de prismes en coin sous forme de cubes solides sont agencés selon une relation dos-à-dos de manière à rétro-réfléchir la lumière dans des directions opposées.

3. Procédé d'identification d'un objet, comprenant :
la fixation d'une structure (110) selon la revendication 1 à une surface de l'objet, la structure rétro-réfléchissante étant configurée pour rétro-réfléchir une lumière présentant une longueur d'onde prédéterminée ;
la direction de la lumière présentant la longueur d'onde prédéterminée au niveau de la structure rétro-réfléchissante ; et
la détection de la lumière rétro-réfléchie.

4. Procédé selon la revendication 3, dans lequel les structures rétro-réfléchissantes (110) sont configurées pour rétro-réfléchir la lumière présentant la longueur d'onde prédéterminée dans au moins deux directions.
